# EUROPÄISCHE PATENTANMELDUNG

(11) **EP 3 104 116 A1**
(43) Veröffentlichungstag der Anmeldung: **14.12.2016**
(21) Anmeldenummer: 15171313.8
(22) Anmeldetag: 10.06.2015
(51) Int. Cl.: G01B 11/04, G01B 21/04

(54) **OPTISCHE ERFASSUNG EINER BANDGRÖSSE MIT BEWEGUNGSKORREKTUR**

(71) Anmelder: Primetals Technologies Germany GmbH, 91052 Erlangen (DE)
(72) Erfinder: Baumgärtner, Agnes, 85521 Ottobrunn (DE); Lorenz, Andreas, 91054 Erlangen (DE); Amthor, Arvid, 98631 Grabfeld OT Nordheim (DE); Gafur, Ilhom, 90766 Fürth (DE)
(74) Vertreter: Metals@Linz

(57) **Zusammenfassung**

Ein Band (1) wird in zwei Walzgerüsten (2, 3) in einem jeweiligen Walzspalt gewalzt. Das Band (1) wird mittels eines zwischen den beiden Walzgerüsten (2, 3) angeordneten Schlingenhebers (4) aus einer durch die beiden Walzspalte definierten direkten Verbindungsebene (5) ausgelenkt. Zur Ermittlung einer auf eine Bandbreitenrichtung bezogene realen Größe (g') des Bandes (1) wird mittels einer oberhalb der Walzgerüste (2, 3) angeordneten Kamera (6) ein Bild (B) des Bandes (1) erfasst. Das Bild (B) wird von einer Auswertungseinrichtung (7) entgegengenommen. In dem erfassten Bild (B) wird eine mit der realen Größe (g') korrespondierende Bild-Größe (g) des Bandes (1) ermittelt. Anhand der Bild-Größe (g) wird unter Berücksichtigung der optischen Abbildungsparameter der Kamera (6) die reale Größe (g') ermittelt. Hierzu wird zunächst anhand der Bild-Größe (g) unter Berücksichtigung der optischen Abbildungsparameter der Kamera (6) eine vorläufige reale Größe (g") des Bandes (1) ermittelt, die auf eine vorbestimmte Referenzauslenkung des Bandes (1) aus der direkten Verbindungsebene (5) bezogen ist. Die reale Größe (g') wird aus der vorläufigen realen Größe (g") durch Berücksichtigung eines Korrekturfaktors (k) ermittelt, der eine Funktion der Abweichung der Auslenkung des Bandes (1) aus der direkten Verbindungsebene (5) von der Referenzauslenkung ist.

## Beschreibung

Die vorliegende Erfindung geht aus von einem Verfahren zur Ermittlung einer auf eine Bandbreitenrichtung bezogenen realen Größe eines in zwei Walzgerüsten in einem jeweiligen Walzspalt gewalzten Bandes, wobei das Band mittels eines zwischen den beiden Walzgerüsten angeordneten Schlingenhebers aus einer durch die beiden Walzspalte definierten direkten Verbindungsebene ausgelenkt wird,
- wobei ein mittels einer oberhalb der Walzgerüste angeordneten Kamera erfasstes Bild des Bandes entgegengenommen wird,
- wobei in dem entgegengenommenen Bild eine mit der realen Größe korrespondierende Bild-Größe des Bandes ermittelt wird,
- wobei anhand der Bild-Größe unter Berücksichtigung der optischen Abbildungsparameter der Kamera die reale Größe ermittelt wird,
- wobei im Rahmen der Ermittlung der realen Größe eine durch den Schlingenheber bewirkte Auslenkung des Bandes aus der direkten Verbindungsebene berücksichtigt wird.

Die vorliegende Erfindung geht weiterhin aus von einem Computerprogramm für eine Auswertungseinrichtung, wobei das Computerprogramm Maschinencode umfasst, der von der Auswertungseinrichtung ausführbar ist und dessen Ausführung bewirkt, dass die Auswertungseinrichtung ein derartiges Verfahren ausführt.

Die vorliegende Erfindung geht weiterhin aus von einer Auswertungseinrichtung für mittels einer Kamera erfasste Bilder, wobei die Kamera mit einem derartigen Computerprogramm programmiert ist, so dass sie im Betrieb ein derartiges Verfahren ausführt.

Ein derartiges Verfahren ist aus der WO 2012/171 627 A1 bekannt.

In Fertigstraßen wird oftmals ein Band gewalzt, insbesondere ein Metallband. Während des Walzens werden Bandcharakteristiken messtechnisch erfasst. Beispiele derartiger Bandcharakteristiken sind eine Bandmittenlage, eine Bandbreite und eine Bandform. Die Erfassung der Bandcharakteristiken erfolgt in der Regel mittels einer Kamera, die oberhalb des Metallbandes angeordnet ist und einen Teil des Zwischengerüstbereichs zwischen den beiden Walzgerüsten erfasst. Der Sichtbereich der Kamera umfasst mindestens die Breite des Bandes.

Bei Fertigstraßen sind weiterhin zwischen den Walzgerüsten oftmals Schlingenheber angeordnet, welche das gewalzte Band aus der Verbindungsebene zwischen den beiden Walzspalten auslenken. Diese Auslenkung ist in der Regel zeitlich variabel und führt daher zu einer zeitlich variablen Abbildungsgeometrie. Eine einfache statische Auswertung der mittels der Kamera erfassten Bilder ist daher mit einem dynamischen Fehler behaftet.

In der WO 2012/171 627 A1 wird vorgeschlagen, bei der Ermittlung der realen Größe insbesondere die Stellung des Schlingenhebers und damit die Auslenkung des Bandes aus der Verbindungsebene zu berücksichtigen. Nähere Ausführungen zur Implementierung finden sich jedoch nicht.

Die Aufgabe der vorliegenden Erfindung besteht darin, Möglichkeiten zu schaffen, mittels derer auf einfache, leicht zu implementierende und zuverlässige Weise die vom Schlingenheber bewirkte Auslenkung des Bandes aus der Verbindungsebene berücksichtigt werden kann.

Die Aufgabe wird durch ein Verfahren mit den Merkmalen des Anspruchs 1 gelöst. Vorteilhafte Ausgestaltungen des erfindungsgemäßen Verfahrens sind Gegenstand der abhängigen Ansprüche 2 bis 5.

Erfindungsgemäß wird ein Verfahren der eingangs genannten Art dadurch ausgestaltet,
- dass zunächst anhand der Bild-Größe unter Berücksichtigung der optischen Abbildungsparameter der Kamera eine vorläufige reale Größe des Bandes ermittelt wird,
- dass die vorläufige reale Größe auf eine vorbestimmte Referenzauslenkung des Bandes aus der direkten Verbindungsebene bezogen ist und
- dass die reale Größe aus der vorläufigen realen Größe durch Berücksichtigung eines Korrekturfaktors ermittelt wird, der eine Funktion der Abweichung der Auslenkung des Bandes aus der direkten Verbindungsebene von der Referenzauslenkung ist.

Es wird also zunächst von einer statischen Abbildungsgeometrie ausgegangen und die zugehörige reale Größe (= vorläufige reale Größe) ermittelt. Die (endgültige) reale Größe wird dann ausgehend von der vorläufigen realen Größe in einem zweiten Schritt durch Berücksichtigung eines Korrekturfaktors ermittelt.

Die Eingangsgröße für die Ermittlung des Korrekturfaktors kann direkt und unmittelbar die Abweichung der Auslenkung des Bandes aus der direkten Verbindungsebene von der Referenzauslenkung sein. In diesem Fall wird zunächst in an sich bekannter Weise aus dem Schlingenheberwinkel die Auslenkung des Bandes aus der direkten Verbindungsebene und daran anschließend die Abweichung von der Referenzauslenkung ermittelt. Alternativ kann ein Referenzschlingenheberwinkel ermittelt werden, bei dem die Referenzauslenkung bewirkt wird. In diesem Fall ist die Eingangsgröße für die Ermittlung des Korrekturfaktors die Abweichung des Schlingenheberwinkels vom Referenzschlingenheberwinkel. Je nachdem, welche dieser beiden Vorgehensweisen ergriffen wird, ergeben sich zwar unterschiedliche funktionale Beziehungen. Das Prinzip bleibt jedoch unverändert.

Die Funktion kann in der Regel als Polynom niedriger Ordnung ausgebildet sein, insbesondere als Polynom zweiter Ordnung.

Das Band ist mittels des Schlingenhebers bis zu einer maximalen Auslenkung aus der direkten Verbindungsebene auslenkbar. Die Referenzauslenkung liegt vorzugsweise im mittleren Bereich zwischen einer Nullauslenkung und der maximalen Auslenkung. Beispielsweise kann die Referenzauslenkung zwischen 35 % und 65 % der maximalen Auslenkung liegen. Bevorzugt ist ein Bereich zwischen 40 % und 60 %, insbesondere zwischen 45 % und 55 %.

Vorzugsweise werden im Rahmen der Ermittlung der vorläufigen realen Größe Abbildungsfehler der Kamera berücksichtigt. Dadurch kann die Genauigkeit bei der Ermittlung der vorläufigen realen Größe gesteigert werden. Als Abbildungsfehler kommen insbesondere eine Bildfeldwölbung und/oder eine Verzeichnung in Frage. Bildfeldwölbung und Verzeichnung sind für Fachleute auf dem Gebiet der Optik bekannte, eindeutig definierte Abbildungsfehler.

Es ist möglich, dass die Funktion, anhand derer der Korrekturfaktor bestimmt wird, fest vorgegeben ist. Alternativ ist es möglich, dass die Funktion parametrierbar ist. In diesem Fall können die Parameter unter Umständen von einem Operator (= Mensch) nach Bedarf eingestellt werden. Vorzugsweise erfolgt jedoch eine Autokalibrierung der Auswertungseinrichtung. In diesem Fall ist vorgesehen,
- dass zunächst in einem Kalibriermodus
   -- für eine Anzahl an Auslenkungen des Bandes jeweils ein mittels der Kamera erfasstes Bild des Bandes entgegengenommen wird, in dem jeweils entgegengenommenen Bild eine jeweilige Bild-Größe des Bandes ermittelt wird und unter Berücksichtigung der optischen Abbildungsparameter der Kamera eine jeweilige vorläufige reale Größe des Bandes ermittelt wird,
   -- weiterhin ein tatsächlicher Wert der realen Größe vorgegeben wird und
   -- anhand des tatsächlichen Wertes der realen Größe, der vorläufigen realen Größen und der jeweils zugehörigen Auslenkung des Bandes mindestens ein Parameter der zur Ermittlung des Korrekturfaktors verwendeten Funktion ermittelt wird und die Funktion entsprechend dem mindestens einen ermittelten Parameter parametriert wird,
- dass sodann in einen Normalmodus übergegangen wird, in dem das erfindungsgemäße Verfahren ausgeführt wird, und
- dass im Normalmodus zur Ermittlung des jeweiligen Korrekturfaktors die entsprechend dem mindestens einen ermittelten Parameter parametrierte Funktion verwendet wird.

Die Aufgabe wird weiterhin durch ein Computerprogramm mit den Merkmalen des Anspruchs 6 gelöst. Erfindungsgemäß bewirkt die Ausführung des Maschinencodes, dass die Auswertungseinrichtung ein erfindungsgemäßes Verfahren ausführt.

Die Aufgabe wird weiterhin durch eine Auswertungseinrichtung mit den Merkmalen des Anspruchs 7 gelöst. Erfindungsgemäß ist die Auswertungseinrichtung mit einem erfindungsgemäßen Computerprogramm programmiert, so dass sie im Betrieb ein erfindungsgemäßes Verfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Teilbereich einer Walzstraße zum Walzen eines Bandes von der Seite,
- FIG 2: den Teilbereich von FIG 1 von oben,
- FIG 3: ein Ablaufdiagramm,
- FIG 4: eine Abbildungsgeometrie und
- FIG 5: ein weiteres Ablaufdiagramm.

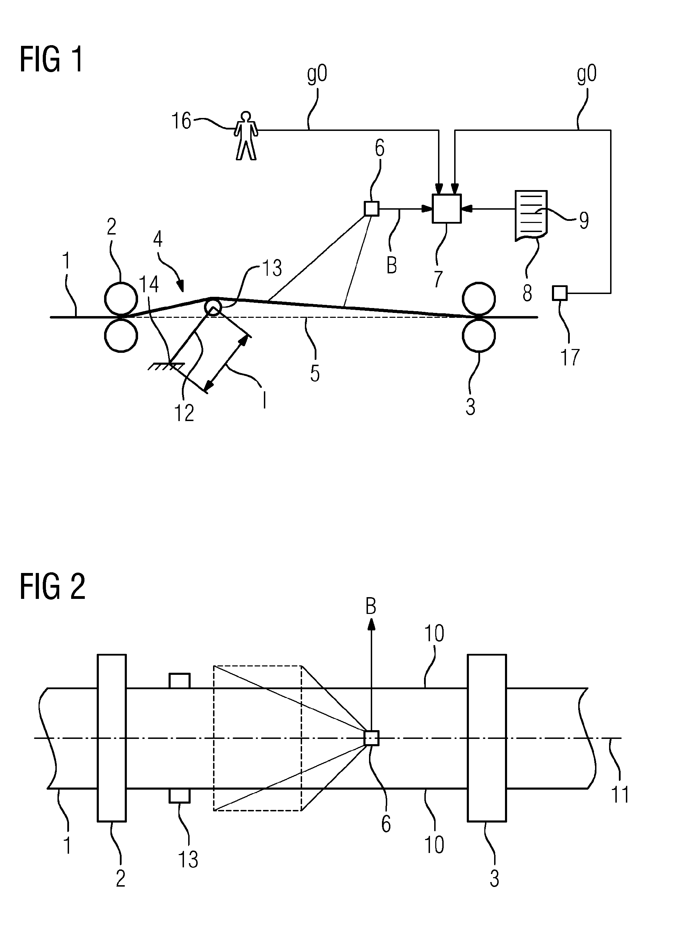

In einer Walzstraße wird ein Band 1 gewalzt. Oftmals handelt es sich bei dem Band 1 um ein Metallband, beispielsweise ein Stahlband oder ein Aluminiumband. Die Walzstraße weist in der Regel drei bis acht Walzgerüste auf, die von dem Band 1 sequenziell nacheinander durchlaufen werden. In den FIG 1 und 2 sind zwei unmittelbar aufeinander folgende Walzgerüste 2, 3 dargestellt, wobei das Band 1 zunächst im Walzgerüst 2 und sodann im Walzgerüst 3 in einem jeweiligen Walzspalt des jeweiligen Walzgerüsts 2, 3 gewalzt wird. Zwischen den beiden Walzgerüsten 2, 3 ist ein Schlingenheber 4 angeordnet, mittels dessen das Band 1 aus einer direkten Verbindungsebene 5 ausgelenkt wird. Die Verbindungsebene 5 (in der Fachsprache in der Regel als pass line bezeichnet) ist durch die beiden Walzspalte der beiden Walzgerüste 2, 3 definiert.

Oberhalb der beiden Walzgerüste 2, 3 ist eine Kamera 6 angeordnet. Mittels der Kamera 6 wird jeweils ein Bild B des Bandes 1 erfasst. Das jeweils erfasste Bild B wird einer Auswertungseinrichtung 7 zugeführt.

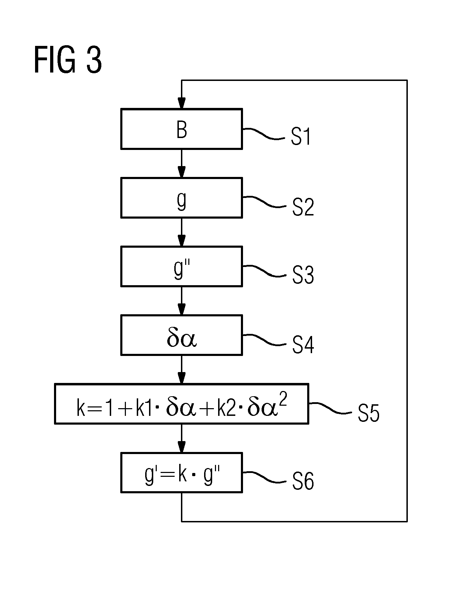

Die Auswertungseinrichtung 7 ist in der Regel als softwareprogrammierbare Einrichtung ausgebildet. Ihre Wirkungsweise wird durch ein Computerprogramm 8 bestimmt, mit dem die Auswertungseinrichtung 7 programmiert ist. Das Computerprogramm 8 umfasst Maschinencode 9, der von der Auswertungseinrichtung 7 ausführbar ist. Die Ausführung des Maschinencodes 9 durch die Auswertungseinrichtung 7 bewirkt, dass die Auswertungseinrichtung 7 im Betrieb von der Kamera 6 erfasste Bilder B gemäß einem Verfahren auswertet, das nachstehend in Verbindung mit FIG 3 näher erläutert wird.

Zunächst erfasst die Kamera 6 ein Bild B. Das erfasste Bild B zeigt - siehe insbesondere FIG 2 - in Transportrichtung des Bandes 1 gesehen einen Abschnitt des Bandes 1 und in Bandbreitenrichtung gesehen das gesamte Band 1. Das erfasste Bild B wird der Auswertungseinrichtung 7 zugeführt, welche es gemäß FIG 3 in einem Schritt S1 entgegennimmt.

In einem Schritt S2 ermittelt die Auswertungseinrichtung 7 in dem entgegengenommenen Bild B eine Bild-Größe g des Bandes 1. Die Bild-Größe g ist auf die Bandbreitenrichtung bezogen und korrespondiert mit einer ebenfalls auf die Bandbreitenrichtung bezogenen realen Größe g' des Bandes 1. Beispielsweise kann in dem erfassten Bild B die Lage einer Seitenkante 10 des Bandes 1 ermittelt werden. Es können auch die Lagen beider Seitenkanten 10 des Bandes 1 ermittelt werden. Aus den Lagen beider Seitenkanten 10 können, soweit erforderlich, weitere Größen des Bandes 1 abgeleitet werden, beispielsweise die Mittellage 11 des Bandes 1 oder dessen Breite b.

Die Bild-Größe g des Bandes 1 wird von der Auswertungseinrichtung 7 im Koordinatensystem des Bildes B ermittelt. Anhand der Bild-Größe g ermittelt die Auswertungseinrichtung 7 daher in einem Schritt S3 weiterhin eine vorläufige reale Größe g" des Bandes 1. Die Ermittlung des Schrittes S3 erfolgt unter Berücksichtigung der optischen Abbildungsparameter der Kamera 6. Vorzugsweise werden im Rahmen des Schrittes S3 nicht nur eine ideale Abbildungsgeometrie der Kamera 6, sondern auch Abbildungsfehler der Kamera 6 berücksichtigt. Insbesondere können die Bildfeldwölbung und/oder die Verzeichnung berücksichtigt werden. Die Implementierung des Schrittes S3 (mit oder ohne Berücksichtigung der Abbildungsfehler der Kamera 6) ist Fachleuten allgemein bekannt und geläufig.

Die vorläufige reale Größe g" ist auf eine vorbestimmte Referenzauslenkung des Bandes 1 aus der direkten Verbindungsebene 5 bezogen. Prinzipiell kann die Referenzauslenkung des Bandes 1 beliebig gewählt sein. Beispielsweise kann die Referenzauslenkung des Bandes 1 eine Nicht-Auslenkung aus der direkten Verbindungsebene 5 sein. Vorzugsweise ist die Referenzauslenkung des Bandes 1 jedoch andersartig bestimmt.

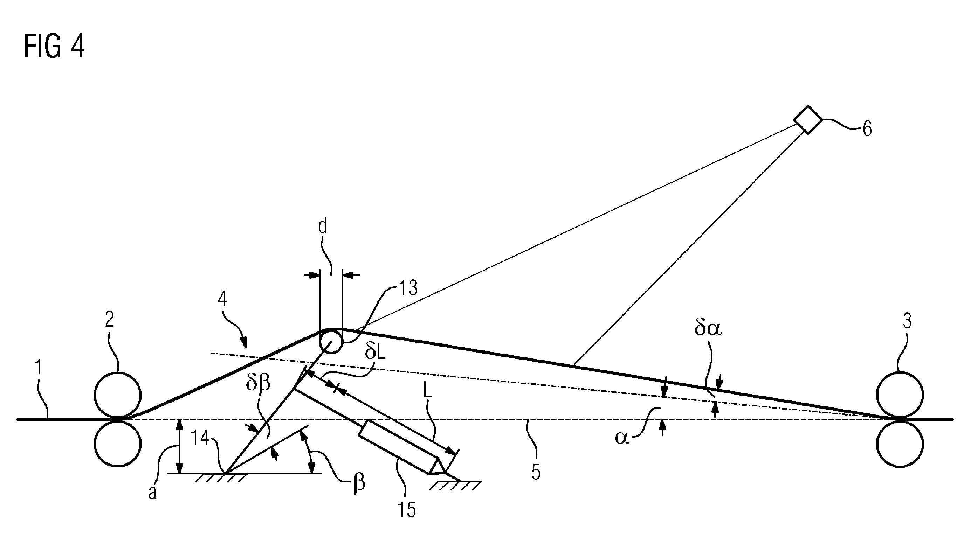

Wie insbesondere aus FIG 4 erkennbar ist, ist das Band 1 mittels des Schlingenhebers 4 bis zu einer maximalen Auslenkung aus der direkten Verbindungsebene 5 auslenkbar. Die maximale Auslenkung ist im Wesentlichen bestimmt durch die Länge 1 des Schlingenheberarms 12, den Durchmesser d der Schlingenheberrolle 13 und den Abstand a des Fußpunkts 14 des Schlingenheberarms 12 von der Verbindungsebene 5. Weiterhin geht in die maximale Auslenkung ein Abstand des Fußpunkts 14 vom Walzgerüst 3 ein. Die maximale Auslenkung ergibt sich durch einfache geometrische Beziehungen und muss daher nicht im einzelnen dargelegt werden. Vorzugsweise ist die Referenzauslenkung des Bandes 1 derart bestimmt, dass sie im mittleren Bereich zwischen der Nicht-Auslenkung und der maximalen Auslenkung liegt. Diese Auslenkung entspricht der in FIG 4 strichpunktiert eingezeichneten Linie. Insbesondere kann die Referenzauslenkung zwischen 35 % und 65 % der maximalen Auslenkung liegen. Bevorzugte Werte sind zwischen 40 % und 60 %, insbesondere zwischen 45 % und 55 % der maximalen Auslenkung.

In einem Schritt S4 nimmt die Auswertungseinrichtung 7 eine Abweichung der Auslenkung des Bandes 1 aus der direkten Verbindungsebene 5 von der Referenzauslenkung entgegen. In einem Schritt S5 ermittelt die Auswertungseinrichtung 7 einen Korrekturfaktor k. Der Korrekturfaktor k ist eine Funktion der Abweichung der Auslenkung des Bandes 1 aus der direkten Verbindungsebene 5 von der Referenzauslenkung. In dem Fall, dass (rein zufällig) die Auslenkung des Bandes 1 aus der direkten Verbindungsebene 5 mit der Referenzauslegung übereinstimmt, weist der Korrekturfaktor k also den Wert 1 auf.

Die Referenzauslenkung kann beispielsweise durch einen Winkel α bestimmt sein, den das Band 1 mit der direkten Verbindungsebene 5 bildet. In diesem Fall ist der Korrekturfaktor k entsprechend der Darstellung in FIG 3 eine Funktion eines Winkels δα, den das Band 1 mit der Referenzauslenkung bildet.

Mit der Referenzauslenkung korrespondiert auch ein Winkel β, den der Schlingenheberarm 12 mit der Verbindungsebene 5 bildet. Die Abweichung der Auslenkung des Bandes 1 aus der direkten Verbindungsebene 5 von der Referenzauslenkung kann daher alternativ auch eine Funktion eines Winkels δβ sein, den der Schlingenheberarm 12 mit dem Winkel β bildet. Wenn der Schlingenheberarm 12, wie allgemein üblich, mittels einer Hydraulikzylindereinheit 15 erstellt wird, korrespondiert mit der Referenzauslenkung weiterhin auch eine Länge L der Hydraulikzylindereinheit 15. Die Abweichung der Auslenkung des Bandes 1 aus der direkten Verbindungsebene 5 von der Referenzauslenkung kann daher alternativ auch eine Funktion eines Längenunterschieds δL sein, um den die Hydraulikzylindereinheit 15, ausgehend von der Länge L, verfahren wird. Unabhängig von der konkreten Wahl der Funktionalität weist der Korrekturfaktor k jedoch den Wert 1 auf, wenn die Auslenkung des Bandes 1 aus der direkten Verbindungsebene 5 mit der Referenzauslenkung übereinstimmt.

Die Funktion, anhand derer der Korrekturfaktor k ermittelt wird, kann nach Bedarf bestimmt sein. Vorzugsweise handelt es sich entsprechend der Darstellung in FIG 3 um ein Polynom zweiter Ordnung. Dies gilt unabhängig davon, ob - wie in FIG 3 dargestellt - die Funktion als Funktion des Winkels δα definiert ist oder - alternativ - als Funktion des Winkels δβ oder des Längenunterschieds δL definiert ist.

In einem Schritt S6 ermittelt die Auswertungseinrichtung 7 aus der vorläufigen realen Größe g" die reale Größe g'. Die Auswertungseinrichtung 7 berücksichtigt bei der Ermittlung der realen Größe g' den Korrekturfaktor k. Insbesondere multipliziert die Auswertungseinrichtung 7 die vorläufige reale Größe g" mit dem Korrekturfaktor k. Das Produkt entspricht der realen Größe g'.

Im Ergebnis werden somit durch die Vorgehensweise von FIG 3 im Rahmen der Ermittlung der realen Größe g' nicht nur die optischen Abbildungsparameter der Kamera 6 berücksichtigt, sondern es wird zusätzlich auch die durch den Schlingenheber 4 bewirkte Auslenkung des Bandes 1 aus der direkten Verbindungsebene 5 berücksichtigt. Durch die sequenzielle Ermittlung zunächst der vorläufigen realen Größe g" und erst danach der realen Größe g' durch einfache Multiplikation mit dem Korrekturfaktor k ergibt sich jedoch gegenüber einer direkten Anpassung der Abbildungsgeometrie ein deutlich verringerter Rechenaufwand bei gleichzeitig hoher Genauigkeit.

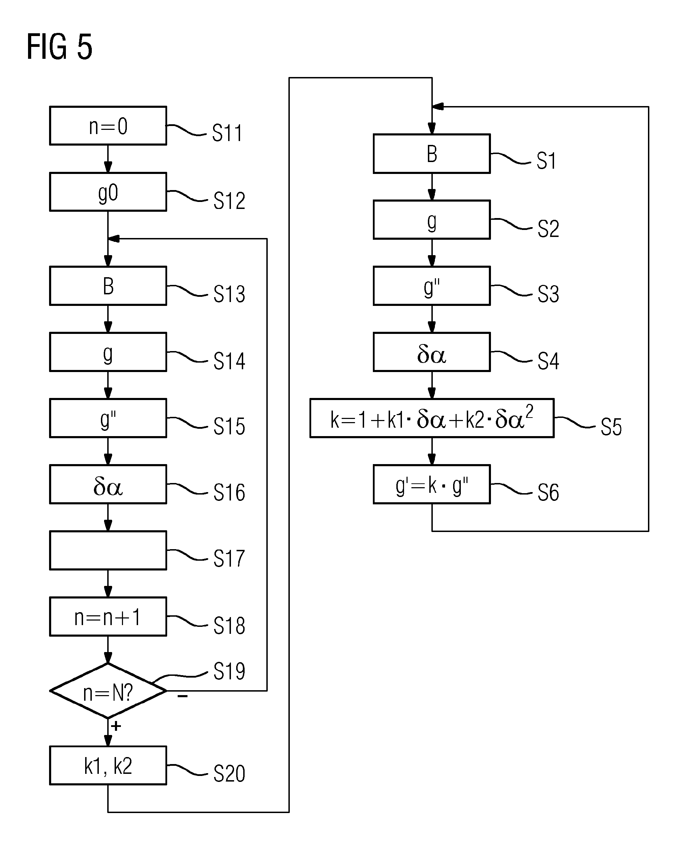

Wie aus der Darstellung in FIG 3 ersichtlich ist, ist die Funktion, anhand derer der Korrekturfaktor k bestimmt wird, parametrierbar. Insbesondere ist sie in dem konkreten Fall der Verwendung eines Polynoms zweiter Ordnung von zwei Parametern k1 und k2 abhängig. Es ist möglich, dass die Parameter k1, k2 der Auswertungseinrichtung 7 direkt vorgegeben werden, insbesondere im Rahmen der Inbetriebnahme. Alternativ ist es entsprechend der Darstellung in FIG 5 möglich, dass die Auswertungseinrichtung 7 zum einen in einem Kalibriermodus betreibbar ist, zum anderen in einem Normalmodus. Im Normalmodus führt die Auswertungseinrichtung 7 die bereits obenstehend in Verbindung mit FIG 3 erläuterten Schrittes S1 bis S6 aus. Im Kalibriermodus führt die Auswertungseinrichtung 7 zusätzliche Schritte S11 bis S20 aus, die nachstehend näher erläutert werden.

Im Schritt S11 setzt die Auswertungseinrichtung 7 zunächst einen Index n auf den Wert 0. Weiterhin nimmt die Auswertungseinrichtung 7 im Schritt S12 einen tatsächlichen Wert g0 der realen Größe g entgegen. Die Vorgabe kann beispielsweise von einem Operator 16 oder mittels einer Messeinrichtung 17 erfolgen.

Im Schritt S13 nimmt die Auswertungseinrichtung 7 von der Kamera 6 ein von der Kamera 6 erfasstes Bild B entgegen. Im Schritt S14 ermittelt die Auswertungseinrichtung 7 in dem erfassten Bild B eine Bild-Größe g des Bandes 1. Im Schritt S15 ermittelt die Auswertungseinrichtung 7 eine vorläufige reale Größe g" des Bandes 1. Im Schritt S16 nimmt die Auswertungseinrichtung 7 eine Abweichung der Auslenkung des Bandes 1 aus der direkten Verbindungsebene 5 von der Referenzauslenkung entgegen. Die Schritte S13 bis S16 korrespondieren 1:1 mit den Schritten S1 bis S4 von FIG 3.

In einem Schritt S17 speichert die Auswertungseinrichtung 7 - in aller Regel intern - die ermittelte vorläufige reale Größe g" und die zugehörige Abweichung der Auslenkung des Bandes 1 aus der direkten Verbindungsebene 5 von der Referenzauslenkung als Datenpaar ab. Weiterhin erhöht die Auswertungseinrichtung 7 in einem Schritt S18 den Index n um 1.

In einem Schritt S19 prüft die Auswertungseinrichtung 7, ob der Index n bereits einen Endwert N erreicht hat. Der Endwert N kann nach Bedarf bestimmt sein. Minimal korrespondiert der Endwert N mit der Anzahl an zu bestimmenden Parametern k1, k2. Er kann jedoch auch größer sein. Je nach Ergebnis der Prüfung geht die Auswertungseinrichtung 7 zum Schritt S13 zurück oder zum Schritt S20 über. Im Schritt S20 ermittelt die Auswertungseinrichtung 7 anhand des tatsächlichen Wertes g0 der realen Größe g', der vorläufigen realen Größen g" und der jeweils zugehörigen Auslenkung des Bandes 1 (bzw. der Abweichung von der Referenzauslenkung) die Parameter k1, k2 der Funktion, die zur Ermittlung des Korrekturfaktors k verwendet werden.

Mit der Ausführung des Schrittes S20 ist der Kalibriermodus abgeschlossen. Vom Schritt S20 aus geht die Auswertungseinrichtung 7 in den Normalmodus über. Im Normalmodus führt die Auswertungseinrichtung 7, wie bereits erwähnt, die Schritte S1 bis S6 aus. Im Normalmodus verwendet die Auswertungseinrichtung 7 jedoch zur Ermittlung des jeweiligen Korrekturfaktors k die Funktion, so wie sie entsprechend dem mindestens einen ermittelten Parameter k1, k2 parametriert ist.

Zusammengefasst betrifft die vorliegende Erfindung somit folgenden Sachverhalt:

Ein Band 1 wird in zwei Walzgerüsten 2, 3 in einem jeweiligen Walzspalt gewalzt. Das Band 1 wird mittels eines zwischen den beiden Walzgerüsten 2, 3 angeordneten Schlingenhebers 4 aus einer durch die beiden Walzspalte definierten direkten Verbindungsebene 5 ausgelenkt. Zur Ermittlung einer auf eine Bandbreitenrichtung bezogene realen Größe g' des Bandes 1 wird mittels einer oberhalb der Walzgerüste 2, 3 angeordneten Kamera 6 ein Bild B des Bandes 1 erfasst. Das Bild B wird von einer Auswertungseinrichtung 7 entgegengenommen. In dem entgegengenommenen Bild B wird eine mit der realen Größe g' korrespondierende Bild-Größe g des Bandes 1 ermittelt. Anhand der Bild-Größe g wird unter Berücksichtigung der optischen Abbildungsparameter der Kamera 6 die reale Größe g' ermittelt. Hierzu wird zunächst anhand der Bild-Größe g unter Berücksichtigung der optischen Abbildungsparameter der Kamera 6 eine vorläufige reale Größe g" des Bandes 1 ermittelt, die auf eine vorbestimmte Referenzauslenkung des Bandes 1 aus der direkten Verbindungsebene 5 bezogen ist. Die reale Größe g' wird aus der vorläufigen realen Größe g" durch Berücksichtigung eines Korrekturfaktors k ermittelt, der eine Funktion der Abweichung der Auslenkung des Bandes 1 aus der direkten Verbindungsebene 5 von der Referenzauslenkung ist.

Die vorliegende Erfindung weist viele Vorteile auf. Insbesondere kann auf zuverlässige und einfache Weise die Auslenkung des Bandes 1 durch den Schlingenheber 4 berücksichtigt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Band
- 2, 3: Walzgerüste
- 4: Schlingenheber
- 5: Verbindungsebene
- 6: Kamera
- 7: Auswertungseinrichtung
- 8: Computerprogramm
- 9: Maschinencode
- 10: Seitenkanten
- 11: Mittellage
- 12: Schlingenheberarm
- 13: Schlingenheberrolle
- 14: Fußpunkt
- 15: Hydraulikzylindereinheit
- 16: Operator
- 17: Messeinrichtung
- a: Abstand
- B: Bilder
- b: Breite
- d: Durchmesser
- g: Bild-Größe
- g': reale Größe
- g": vorläufige reale Größe
- g0: Wert der realen Größe
- k: Korrekturfaktor
- k1, k2: Parameter
- L, l: Längen
- n: Index
- N: Endwert
- S1 bis S20: Schritte

- α, β: Winkel
- δα, δβ: Winkel
- δL: Längenunterschied

## Patentansprüche

1. Verfahren zur Ermittlung einer auf eine Bandbreitenrichtung bezogene realen Größe (g') eines in zwei Walzgerüsten (2, 3) in einem jeweiligen Walzspalt gewalzten Bandes (1), wobei das Band (1) mittels eines zwischen den beiden Walzgerüsten (2, 3) angeordneten Schlingenhebers (4) aus einer durch die beiden Walzspalte definierten direkten Verbindungsebene (5) ausgelenkt wird,
- wobei ein mittels einer oberhalb der Walzgerüste (2, 3) angeordneten Kamera (6) erfasstes Bild (B) des Bandes (1) entgegengenommen wird,
- wobei in dem entgegengenommenen Bild (B) eine mit der realen Größe (g') korrespondierende Bild-Größe (g) des Bandes (1) ermittelt wird,
- wobei anhand der Bild-Größe (g) unter Berücksichtigung der optischen Abbildungsparameter der Kamera (6) die reale Größe (g') ermittelt wird,
- wobei im Rahmen der Ermittlung der realen Größe (g') eine durch den Schlingenheber (4) bewirkte Auslenkung des Bandes (1) aus der direkten Verbindungsebene (5) berücksichtigt wird, **dadurch gekennzeichnet,**
- **dass** zunächst anhand der Bild-Größe (g) unter Berücksichtigung der optischen Abbildungsparameter der Kamera (6) eine vorläufige reale Größe (g") des Bandes (1) ermittelt wird,
- **dass** die vorläufige reale Größe (g") auf eine vorbestimmte Referenzauslenkung des Bandes (1) aus der direkten Verbindungsebene (5) bezogen ist und
- **dass** die reale Größe (g') aus der vorläufigen realen Größe (g") durch Berücksichtigung eines Korrekturfaktors (k) ermittelt wird, der eine Funktion der Abweichung der Auslenkung des Bandes (1) aus der direkten Verbindungsebene (5) von der Referenzauslenkung ist.

2. Verfahren nach Anspruch 1,
**dadurch gekennzeichnet,**
**dass** die Funktion ein Polynom zweiter Ordnung ist.

3. Verfahren nach Anspruch 1 oder 2,
**dadurch gekennzeichnet,**
**dass** das Band (1) mittels des Schlingenhebers (4) bis zu einer maximalen Auslenkung aus der direkten Verbindungsebene (5) auslenkbar ist und dass die Referenzauslenkung zwischen 35 % und 65 % der maximalen Auslenkung liegt.

4. Verfahren nach Anspruch 1, 2 oder 3,
**dadurch gekennzeichnet,**
**dass** im Rahmen der Ermittlung der vorläufigen realen Größe (g") Abbildungsfehler der Kamera (6) berücksichtigt werden.

5. Verfahren nach einem der obigen Ansprüche,
**dadurch gekennzeichnet,**
- **dass** zunächst in einem Kalibriermodus
-- für eine Anzahl an Auslenkungen des Bandes (1) jeweils ein mittels der Kamera (6) erfasstes Bild (B) des Bandes (1) entgegengenommen wird, in dem jeweils entgegengenommenen Bild (B) eine jeweilige Bild-Größe (g) des Bandes (1) ermittelt wird und unter Berücksichtigung der optischen Abbildungsparameter der Kamera (6) eine jeweilige vorläufige reale Größe (g") des Bandes (1) ermittelt wird,
-- weiterhin ein tatsächlicher Wert (g0) der realen Größe (g') vorgegeben wird und
-- anhand des tatsächlichen Wertes (g0) der realen Größe (g'), der vorläufigen realen Größen (g") und der jeweils zugehörigen Auslenkung des Bandes (1) mindestens ein Parameter (k1, k2) der zur Ermittlung des Korrekturfaktors (k) verwendeten Funktion ermittelt wird und die Funktion entsprechend dem mindestens einen ermittelten Parameter (k1, k2) parametriert wird,
- **dass** sodann in einen Normalmodus übergegangen wird, in dem das Verfahren nach einem der obigen Ansprüche ausgeführt wird, und
- **dass** im Normalmodus zur Ermittlung des jeweiligen Korrekturfaktors (k) die entsprechend dem mindestens einen ermittelten Parameter (k1, k2) parametrierte Funktion verwendet wird.

6. Computerprogramm für eine Auswertungseinrichtung (7), wobei das Computerprogramm Maschinencode (9) umfasst, der von der Auswertungseinrichtung (7) ausführbar ist und dessen Ausführung bewirkt, dass die Auswertungseinrichtung (7) ein Verfahren nach einem der obigen Ansprüche ausführt.

7. Auswertungseinrichtung für mittels einer Kamera (6) erfasste Bilder (B), wobei die Auswertungseinrichtung mit einem Computerprogramm (8) nach Anspruch 6 programmiert ist, so dass sie im Betrieb ein Verfahren nach einem der Ansprüche 1 bis 5 ausführt.
